# EUROPÄISCHE PATENTSCHRIFT

(11) **EP 3 458 939 B1**
(45) Veröffentlichungstag und Bekanntmachung des Hinweises auf die Patenterteilung: **24.03.2021**
(21) Anmeldenummer: 17728173.0
(22) Anmeldetag: 02.06.2017
(51) Int. Cl.: G06F 3/01

(54) **INTERAKTIONSSYSTEM UND -VERFAHREN**
INTERACTION SYSTEM AND METHOD
SYSTÈME ET PROCÉDÉ D'INTERACTION

(30) Priorität: 05.07.2016 DE 102016212236
(43) Veröffentlichungstag der Anmeldung: 27.03.2019
(73) Patentinhaber: Siemens Aktiengesellschaft, 80333 München (DE)
(72) Erfinder: JOHNSON, Rebecca, 81739 München (DE); MACWILLIAMS, Asa, 82256 Fürstenfeldbruck (DE)
(86) Internationale Anmeldenummer: PCT/EP2017/063415
(87) Internationale Veröffentlichungsnummer: WO 2018/007075

(56) Entgegenhaltungen:
- EP-A2- 2 863 276
- US-A1- 2015 242 120
- US-A1- 2016 035 246
- US-A1- 2016 070 439

## Beschreibung

Die Erfindung betrifft ein Interaktionssystem und ein Verfahren zur Interaktion eines Bedieners mit einem Modell eines technischen Systems.

Ein derartiges Interaktionssystem und Verfahren kommt beispielsweise im Bereich der Automatisierungstechnik, bei Produktions- oder Werkzeugmaschinen, bei Diagnose- oder Serviceunterstutzungssystemen sowie bei einer Bedienung und Wartung komplexer Komponenten, Geräte und Systeme, insbesondere industrielle oder medizinische Anlagen zum Einsatz.

Im Stand der Technik, wie beispielsweise US 2016/0070439 A1 sowie US 2016/0035246 A1, sind Interaktionssysteme bekannt, welche einen Bediener technischer Anlagen mit Hilfe einer angereicherten Situationsdarstellung bei einer Bewältigung von Einrichtungs- und Wartungsarbeiten unterstützen. Eine angereicherte Situationsdarstellung ist in der Fachwelt auch als »Augmented Reality« bekannt. Dabei wird eine vom Bediener wahrnehmbare Situation mit computergenerierten Zusatzinformationen oder virtuellen Objekten mittels Einblendung oder Überlagerung ergänzt oder ersetzt.

Bekannt ist insbesondere eine Verwendung von Datenbrillen. Ein mit einer Datenbrille ausgestatteter Bediener kann beispielsweise ein Objekt eines technischen Systems betrachten, welches zeitgleich durch eine optische Erfassungseinheit der Datenbrille erfasst wird. Im Zuge einer rechnergestützte Auswertung des optisch erfassten Objekts stehen Zusatzinformationen oder virtuelle Objekte zu diesem Objekt zur Verfügung, die der Bediener auswählen und abrufen kann. Zusatzinformationen umfassen beispielsweise technische Handbücher oder Wartungsanleitungen, während virtuelle Objekte durch optische Einblendung oder Überlagerung die wahrnehmbare Situation anreichern.

Beispielsweise sind virtuelle Aktionsmarkierungen eines Industrieroboters zum Zweck einer Kollisionsanalyse bekannt, welche ein reales industrielles Umfeld im Blickfeld einer Datenbrille überlagern, um dem Bediener eine intuitive Überprüfung zu gewähren, ob der Industrieroboter von seinen Abmessungen oder von seinem Aktionsradius an einer vorgesehenen Stelle in der vorgesehenen Umgebung positioniert werden kann.

Eine Auswahl von virtuellen Objekten sowie ein Abruf von Zusatzinformationen erfordert die Erfassung von Befehlen seitens des Bedieners. In einem industriellen Umfeld scheiden bekannte Eingabegeräte, wie z.B. Tastatur, Touchscreen, Graphiktablett, Trackpad oder Maus, welche für eine sitzende Arbeitsposition eines Bedieners in einem Büroumfeld zugeschnitten sind, bereits aufgrund der üblicherweise stehenden Arbeitsposition aus.

Ein weiterer bekannter Ansatz ist das Bewegen oder Kippen eines drahtlosen Eingabegeräts, beispielsweise einem Flystick oder einem drahtlosen Gamepad, um die gewünschte Interaktion vorzunehmen. Der Bediener muss hierzu das Eingabegerät in der Hand halten, hat also nicht beide Hände frei.

Eine bekannte Vorsehung von Eingabeelementen an Datenbrillen hat zwar den Vorteil, dass der Bediener zumeist beide Hände frei hat, die Auslösung eines Eingabebefehls durch Betätigen eines derartigen Eingabeelements ist jedoch in vielen Situationen aufgrund eines laufenden Kontakts der Hände mit Betriebsstoffen unerwünscht, etwa für einen Chirurgen oder für einen Maschinentechniker.

Eine bekannte optische Detektion von Gesten, beispielsweise unter Verwendung von Microsoft Kinect, Leap Motion oder Microsoft HoloLens, sehen eine oder mehrere optischen Erfassungseinrichtungen vor, welche eine Körperhaltung des Bedieners dreidimensional, beispielsweise unter Anwendung von Laufzeitverfahren (Time of Flight) oder Streifenlichttopometrie (Structured-light) erfassen. Die genannten Verfahren haben ebenfalls den Vorteil einer freihändigen Arbeitsweise des Bedieners, erfordern jedoch einen Einsatz von optischen Erfassungseinrichtungen in der Umgebung des Bedieners und damit eine nicht minder aufwändige Vorbereitung der Arbeitsumgebung.

EP 2 863 276 A2 zeigt eine Gestenerkennung, beispielsweise eine Armbewegung, mittels einer Smart Watch, beispielsweise unter Verwendung eines Beschleunigungssensors. US 2015/0242120 A1 beschreibt die Erkennung von Touch-Gesten auf einem Armband für eine Smart Watch.

Zusammenfassend erfolgen heute bekannte Maßnahmen zur Interaktion nicht berührungslos, unsicher oder mit einem arbeitssituativ unpassenden Einsatz von Eingabegeräten oder optischen Mitteln zur Gestenerfassung.

Die vorliegende Erfindung ist demgegenüber vor die Aufgabe gestellt, ein Interaktionssystem mit einer intuitiven und berührungslosen Erfassung von Befehlen mittels Gesten bereitzustellen, welches eine Handhabung von Eingabegeräten entbehrlich macht.

Die Aufgabe wird durch ein Interaktionssystem mit den Merkmalen des Patentanspruchs 1 gelöst.

Das erfindungsgemäße Interaktionssystem ist ausgebildet zum Tragen am menschlichen Körper und umfasst mindestens eine in einem Armbereich eines Bedieners angebrachte Gestenerfassungseinheit mit einer Mehrzahl von Trägheitssensoren zur Erfassung von Gesten, d.h. von Bewegung, Drehung und/oder Stellung von Armen des Bedieners. Eine vorzugsweise im Kopfbereich des Bedieners tragbare binokulare Visualisierungseinheit dient einer lagerichtigen Visualisierung von virtuellen Objekten in ein Sichtfeld des Bedieners. Weiterhin ist eine Steuerungseinheit zum Ansteuern der Visualisierungseinheit vorgesehen, die zum Erkennen der von der Gestenerfassungseinheit erfassten Gesten und zur Verarbeitung der durch die Gesten des Bedieners auszulösenden Interaktion des Bedieners mit den Objekten vorgesehen ist. Die Steuerungseinheit ist am Körper des Bedieners angeordnet, vorzugsweise in die Visualisierungseinheit oder in einer der Mehrzahl von Gestenerfassungseinheiten integriert

Es ist dabei vorgesehen, zwei an einem jeweiligen Arm des Bedieners vorgesehenen Gestenerfassungseinheiten vorzusehen, wobei durch das Interaktionssystem einer der beiden Gestenerfassungseinheiten wahlweise eine Auswahlgeste, eine Bereichswahlgeste, eine Bewegungsgeste, eine Navigationsgeste und/oder eine Zoomgeste und der anderen Gestenerfassungseinheit eine Bestätigungsgeste zugeordnet ist.

Im Gegensatz zu bekannten Interaktionssystemen ist das erfindungsgemäße Interaktionssystem extrem mobil, oder vielmehr tragbar bzw. »wearable«. Die Gestensteuerung erfolgt intuitiv mit einer Bewegung und/oder Drehung der Vorderarme. Ein in einem industriellen Umfeld oftmals unpassendes Eingabegerät ist nicht erforderlich. Der Bediener kann aufgrund des tragbaren Charakters des erfindungsgemäßen Interaktionssystems mühelos zwischen einer eigentlichen Wartung einer Industrieanlage und einer immersiven Bewegung in einem virtuellen Modell der Industrieanlage wechseln, beispielsweise um vor oder während der Wartung der Industrieanlage zugehörige Maschinendaten oder Explosionszeichnungen einzusehen.

Ein besonderer Vorteil der Erfindung besteht darin, dass als tragbare Gestenerfassungseinheiten handelsübliche mit Trägheitssensoren ausgestatte Smart Watches verwendbar sind.

Die Aufgabe wird weiterhin durch ein Verfahren zur Interaktion eines Bedieners mit einem Modell eines technischen Systems gelöst, wobei ohne Einschränkung auf eine Reihenfolge folgende Schritte nacheinander oder gleichzeitig durchgeführt werden:
- Erfassen von durch eine Armstellung, Armbewegung und/oder Armdrehung des Bedieners erzeugten Gesten durch mindestens eine in einem Armbereich des Bedieners angebrachte Gestenerfassungseinheit mit einer Mehrzahl von Trägheitssensoren;
- lagerichtige Visualisierung von Objekten in ein Sichtfeld des Bedieners durch eine binokulare Visualisierungseinheit; und;
- Ansteuerung der Visualisierungseinheit, Erkennung der von der Gestenerfassungseinheit erfassten Gesten und Verarbeitung der durch die Gesten des Bedieners auszulösenden Interaktion des Bedieners mit den Objekten durch eine Steuerungseinheit.

Es ist dabei vorgesehen, zwei Gestenerfassungseinheiten an einem jeweiligen Arm des Bedieners vorzusehen. Durch das Interaktionssystem - also durch die Steuerungseinheit oder durch die jeweilige Gestenerfassungseinheit oder durch die Steuerungseinheit in Zusammenwirkung mit beiden Gestenerfassungseinheiten - kann einer der beiden Gestenerfassungseinheiten wahlweise eine Auswahlgeste, eine Bereichswahlgeste, eine Bewegungsgeste, eine Navigationsgeste und/oder eine Zoomgeste und der anderen Gestenerfassungseinheit eine Bestätigungsgeste zugordnet werden.

Weitere Ausgestaltungen der Erfindung sind Gegenstand der abhängigen Patentansprüche.

Gemäß einer vorteilhaften Ausgestaltung der Erfindung ist vorgesehen, für die Gestenerfassungseinheit zudem myoelektrische und/oder mechanische Sensoren zur Erfassung der durch Armbewegungen des Bedieners erzeugten Gesten vorzusehen. Myoelektrische Sensoren erfassen eine in Folge biochemischer Prozesse in den Muskelzellen erzeugte elektrische Spannung. Mechanische Sensoren erfassen beispielsweise mechanische Oberflächenspannungsveränderungen oder Krafteinwirkungen an der Oberfläche des Körpers infolge der Armbewegungen des Bedieners. Diese Maßnahmen gewährleistet eine Verfeinerung der Zuverlässigkeit der Gestensteuerung und es können z.B. auch Fingerbewegungen erfasst werden.

Gemäß einer vorteilhaften Ausgestaltung der Erfindung wird die Visualisierungseinheit so angesteuert, dass die Darstellung virtueller Objekte nicht ausschließlich das Blickfeld des Bedieners bestimmt, so dass die Darstellung virtueller Objekte also zusätzlich zur realen Umgebung für den Bediener sichtbar wird. Mit einer derart angereicherten Situationsdarstellung oder »Augmented Reality« wird die vom Bediener optisch wahrnehmbare reale Umgebung mit den vom Interaktionssystem erzeugten virtuellen Objekten mittels Einblendung ergänzt. Eine solche Ausgestaltung bietet sich in Fällen an, in denen eine Einblendung virtueller Objekte, beispielsweise eines Hinweispfeils an einem zu wartenden Maschinenbauteil, zusätzlich zur Rezeption der realen Umgebung das Verständnis der realen Umgebung unterstützt.

Gemäß einer alternativen Ausgestaltung der Erfindung wird die Visualisierungseinheit so angesteuert, dass die reale Umgebung mit den vom Interaktionssystem erzeugten virtuellen Objekten durch Überlagerung ersetzt wird. Eine solche Ausgestaltung bietet sich in Fällen an, in denen dem Bediener ein größerer Grad an Immersion mit der virtuellen Situationsdarstellung angeboten werden soll, in denen also eine Überblendung mit der realen Umgebung hinderlich für das Verständnis der virtuellen Darstellung wäre.

Gemäß einer vorteilhaften Ausgestaltung der Erfindung ist vorgesehen, in mindestens einer Gestenerfassungseinheit und oder in der Visualisierungseinheit einen oder mehrere Aktoren vorzusehen, mittels derer durch die Steuereinheit eine Ausgabe einer für den Bediener haptisch wahrnehmbare Rückmeldung veranlasst werden kann. Als Aktor dient beispielsweise ein Unwuchtmotor zur Erzeugung von Vibrationen. Diese Rückmeldung erfolgt - im Fall einer Lokalisierung der Aktoren in der Visualisierungseinheit - im Kopfbereich beziehungsweise - im Fall einer Lokalisierung der Aktoren in einer Gestenerfassungseinheit - in einem jeweiligen Armbereich. Eine solche Rückmeldung wird bei bestimmten Ereignissen ausgelöst werden, beispielsweise einem Markieren oder virtuellen Ergreifen eins Objekts oder bei Erreichen eines Listenendes eines Menüs.

Gemäß einer weiteren vorteilhaften Ausgestaltung der Erfindung weist das Interaktionssystem mindestens einen Marker zur Bestimmung von Ortskoordinaten des Interaktionssystems auf. Ein oder mehrere Marker können beispielsweise an der mindestens einen Gestenerfassungseinheit, an der Visualisierungseinheit und/oder an der Steuereinheit vorgesehen sein. Diese Maßnahme gestattet eine Verwendung des erfindungsgemäßen Interaktionssystems in klassischen virtuellen Umgebungen, in denen ein - beispielsweise optisches - Trackingsystem verwendet wird. In einer Ausführungsform erfassen Infrarotkameras die Ortskoordinaten des mindestens einen Markers und geben diese an die Steuereinheit oder an eine Interaktionssystemexterne Steuereinheit weiter. Eine derartige Weiterbildung unterstützt zusätzlich die erfindungsgemäße Ortsbestimmung des Bedienersichtfelds und des Bedieners selbst, um eine lagerichtige Visualisierung von Objekten im Sichtfeld des Bedieners zu gewährleisten.

Eine weitere vorteilhafte Ausgestaltung der Erfindung sieht eine oder mehrere in der Steuerungseinheit vorgesehene Schnittstellen zur Kommunikation mit mindestens einem weiteren Interaktionssystem und/oder mindestens einem Server vor. Diese Maßnahme bildet die Grundlage eines Interaktionssystemverbunds mit mindestens einem Interaktionssystem, gegebenenfalls unter Beteiligung weiterer Zentralrechner bzw. Server. Mit einem Interaktionssystemverbund können beispielweise mehrere kooperierende Ingenieure im Sinne eines »Collaborative Working« ein Design Review an einem Modell einer Industrieanlage durchführen.

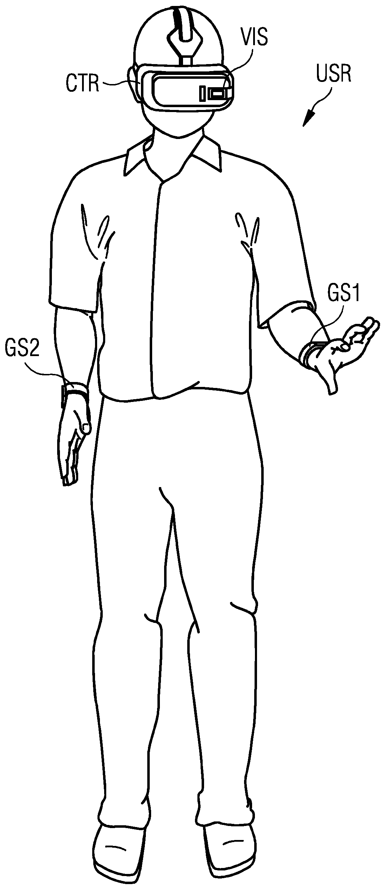

Im Folgenden werden weitere Ausführungsbeispiele und Vorteile der Erfindung anhand der Zeichnung näher erläutert. Dabei zeigt die einzige FIG eine schematische Strukturdarstellung eines das erfindungsgemäße Interaktionssystem bedienenden Bedieners.

Die FIG zeigt einen Bediener USR mit einer am Körper des Bedieners USR getragenen Visualisierungseinheit VIS, einer Steuerungseinheit CTR sowie zwei Gestenerfassungseinheiten GS1,GS2, welche an einem jeweiligen Armbereich des Bedieners USR lösbar angebracht sind, beispielsweise mit einem im Bereich des Handgelenks angebrachten Armbands.

Eine an der Steuerungseinheit CTR zum Ablauf gebrachte Software berechnet eine virtuelle dreidimensionale Umgebung bzw. Szenerie, welche dem Bediener über die mit der Steuerungseinheit CTR verbundene Visualisierungseinheit VIS dargestellt wird. Die Szenerie umfasst oder stellt ein Modell eines technischen Systems dar.

Jede Gestenerfassungseinheit GS1,GS2 umfasst eine Mehrzahl von - nicht dargestellten - Trägheitssensoren, optional auch zusätzliche - nicht dargestellte - optische Sensoren, magnetometrische Sensoren, gyroskopische Sensoren, mechanische Kontaktsensoren und/oder myoelektrische Sensoren.

Während die Trägheitssensoren - in Analogie zu einer oben beschriebenen Erfassung der Kopfbewegung - der Gestenerfassungseinheiten GS1,GS2 eine Bewegung eines jeweiligen Arms des Bedieners USR erfassen, dienen die myoelektrische Sensoren einer Erfassung einer elektrischen Spannung in Folge biochemischer Prozesse in den Muskelzellen. Die zusätzlichen Messergebnisse der myoelektrischen Sensoren werden gemäß einer Ausgestaltung der Erfindung für eine Verfeinerung mit Hilfe der Trägheitssensoren erhobenen Bewegungsdaten herangezogen. Vorzugsweise tauschen die Gestenerfassungseinheiten GS1,GS2 und die Steuerungseinheit CTR in drahtloser Weise Daten aus.

Basierend auf den detektierten Armbewegungen des Bedieners USR wird in der Steuerungseinheit CTR auf eine Geste geschlossen. Das Interaktionssystem interpretiert diese Geste als einen Eingabebefehl, auf Grund dessen eine Operation basierend auf dem Eingabebefehl ausgeführt wird.

Vorzugsweise umfassen die im freien Raum erzeugten Gesten, über die die Steuerungsbefehle und/oder Auswahlbefehle ausgelöst werden,
- eine mit einer Hand entlang einer ersten Richtung durchgeführte Wischbewegung;
- eine mit einer Hand entlang einer der ersten Richtung entgegengesetzten Richtung durchgeführte Wischbewegung;
- eine Bewegung eines Armes entlang einer gegenüber der ersten Richtung senkrecht verlaufenden zweiten Richtung;
- ein Bewegen eines Armes entlang einer der zweiten Richtung entgegengesetzten Richtung;
- eine Pronation oder Supination eines Armes;
- eine Abduktion oder Adduktion eines Arms;
- eine Innen- und Außenrotation eines Arms;
- eine Ante- und/oder Retroversion eines Arms;
- eine Handbewegung, deren Handinnenfläche in die erste Richtung zeigt; und/oder;
- eine Handbewegung, deren Handinnenfläche in die der zweiten Richtung entgegengesetzte Richtung zeigt;
sowie alle weiteren denkbaren Gesten in Kombination der oben genannten Bewegungen. Die erste oder zweite Richtung kann dorsal, palmar bzw. volar, axial, abaxial, ulnar oder radial verlaufen.

Die Steuerungseinheit CTR analysiert die von der Gestenerfassungseinheit GS1,GS2 erfassten Bewegungsmuster und klassifiziert diese in Gesten. Aus den Gesten des Bedieners USR wird dann eine auszulösende Interaktion des Bedieners USR mit den virtuellen Objekten bestimmt. Die Steuerungseinheit CTR steuert die Visualisierungseinheit VIS so an, dass die Interaktion des Bedieners USR mit den Objekten für diesen sichtbar dargestellt wird.

Die Visualisierungseinheit VIS umfasst optional eine Mehrzahl von - nicht dargestellten - Trägheitssensoren. Vorzugsweise sind mehrere Trägheitssensoren mit 9 Freiheitsgraden oder auch »Degrees of Freedom«, in der Fachwelt auch als »9DOF« bekannt, vorgesehen. Die Trägheits- oder auch Inertialsensoren liefern jeweils Werte über eine gyroskopische Drehrate, Beschleunigung sowie Magnetfeld in jeweils allen drei Raumrichtungen. Eine Rotation des Kopfes wird über eine Messung der Drehrate, translatorische Kopfbewegungen des Bedieners USR werden über eine Messung der Beschleunigung erfasst. Die Messung des Magnetfelds dient vorwiegend einem Driftausgleich der gyroskopischen Sensoren und trägt somit für eine lagerichtige Visualisierung virtueller Objekte im Sichtfeld des Benutzers bei. Diese lagerichtige Visualisierung virtueller Objekte im Sichtfeld des Benutzers ist in der Fachwelt auch als »Head Tracking« bekannt.

Vorzugsweise ist auch in den Gestenerfassungseinheit GS1,GS2 mindestens ein - nicht dargestellter - Trägheitssensor der oben genannten Art vorgesehen, welcher vorzugsweise über 9 Freiheitsgrade verfügt.

Das Head Tracking kann in einer vorteilhaften Weiterbildung zusätzlich über eine Auswertung einer - nicht dargestellten - in der Visualisierungseinheit VIS vorgesehenen optischen Erfassungseinheit bzw. Kamera verbessert werden, wobei in Folge der Kopfbewegung durch die Erfassungseinheit erfasste Veränderungen in der Umgebung des Bedieners USR ausgewertet werden.

Die von der Steuerungseinheit CTR berechnete Szenerie wird somit einem durch die Kopfstellung, -drehung und -bewegung erfassten Perspektivenwechsel des Bedieners USR angepasst.

Der Bediener USR kann sich durch entsprechende Kopfbewegungen innerhalb der Szenerie orientieren und bewegen. Hierzu werden Ortskoordinaten seiner Kopfposition an seine eigene Perspektive bzw. »First Person Perspective« angepasst.

Der Bediener USR kann weiterhin zwei- oder dreidimensionale Objekte bzw. Handhabungsmarkierungen in der Szenerie virtuell erfassen und bewegen. Auf diese Weise wird ein so genanntes »Virtual hands«-Konzept unterstützt. Eine Auswahl oder Handhabung von Objekten in der Szenerie geht einer jeweiligen Bearbeitungsoperation voraus, welche beispielsweise in einer Veränderung von Parametern besteht. Eine Bearbeitung, Auswahl oder Handhabung von Objekten wird vorzugsweise über einen Wechsel in der Größe, Farbe, Transparenz, Form, Position, Orientierung oder anderen Eigenschaften der virtuellen Objekte visualisiert.

Schließlich kann auch die Szenerie selbst infolge bestimmter Bearbeitungsoperationen oder Handhabungsmarkierungen angepasst werden, beispielsweise in einem Wechsel der Perspektive oder Darstellungsweise bzw. »Rendering« der Szenerie, welche zur Folge hat, dass diese größer, kleiner, verfremdet, neblig, heller oder dunkler dargestellt wird.

Die virtuelle Szenerie wird den Bedürfnissen des Bedieners USR in Bezug auf eine Geschwindigkeit der Darstellung angepasst, beispielsweise bei einer bewegtbildlichen Präsentation einer Reparaturanleitung.

Eine Interaktion des Bedieners USR mit den Objekten erfolgt optional mithilfe textbasierter oder symbolbasierter Menüdarstellungen sowie von beliebigen Steuerungselementen, beispielsweise eine Auswahl mehrerer Möglichkeiten aus einem textbasierten Menü.

Schließlich ist auch ein Umschalten zwischen realer, virtueller und angereicherter Darstellung möglich, insbesondere dann, wenn die binokulare Visualisierungseinheit VIS dazu eingerichtet ist, die reale Umgebung über eine Kamera zu erfassen und das Kamerabild lagerichtig in das Sichtfeld des Benutzers USR einblendbar ist.

Weiterhin sind verschiedene Interaktionsmodi vorsehbar, beispielsweise dahingehend, dass ein linker Arm des Bedieners USR eine Bewegung innerhalb der Szenerie verursacht, während der rechte Arm einer Auswahl und Handhabung von virtuellen Objekten dient. Alternativ wird der rechte Arm für eine Handhabung der Objekte verwendet und der linke Arm für eine Änderung der Eigenschaften eines ausgewählten Objekts. Diese und weitere Interaktionsmodi können wiederum durch eine Eingabe von Gesten ausgewählt oder gewechselt werden.

Gemäß einer Ausgestaltung ist eine optische Rückkopplung virtueller Ereignisse an den Bediener USR vorgesehen. Ein haptisches Feedback ist beispielsweise in folgenden Situationen vorteilhaft: Der Bediener USR »berührt« ein virtuelles Objekt oder er wechselt in einen anderen Interaktionsmodus für eine bestimmte Hand - zum Beispiel Kamerabewegung, Bewegung einer virtuellen Hand - durch eine geeignete Geste. Weiterhin kann ein haptisches Feedback auch durch einen Aufruf einer Auswahloption ausgelöst werden.

Die Steuerungseinheit CTR und die Visualisierungseinheit VIS sind in einer Ausgestaltung der Erfindung gemäß der Zeichnung einstückig gestaltet, beispielsweise in Form eines mobilen Endgeräts mit Display, welches mit einer geeigneten Befestigung am Kopf des Bedieners USR befestigt und in einem definierbaren Abstand zum Sichtfeld des Bedieners USR gehalten wird, gegebenenfalls mit Einsatz einer Optik, umfassend Linsen, Spiegeln oder Prismen. Alternativ sind - je nach Einsatzumgebung - auch Datenhelme oder Datenbrillen vorteilhaft für eine Implementierung der Erfindung.

Das erfindungsgemäße Interaktionssystem eignet sich insbesondere zur Anwendung in einem industriellen Umfeld. Diese grundsätzliche Eignung wird durch weitere vorteilhafte Weiterbildungen der Erfindung noch deutlicher.

Gemäß einer vorteilhaften Ausgestaltung der Erfindung sind die Steuerungseinheit CTR und zumindest Teile der Visualisierungseinheit VIS in einen Schutzhelm eines Arbeiters oder in eine Kopflupenhalterung eines Chirurgen integriert. Auf diese Weise wird eine stetige Verfügbarkeit des Interaktionssystems im Arbeitsumfeld gewährleistet. Der Arbeiter oder Chirurg kann bei Bedarf einen Bildgebungsteil der Visualisierungseinheit VIS - also beispielsweise ein binokulares Display, eine Spiegelanordnung oder eine Linsenanordnung - durch eine Schwenkbewegung in sein Blickfeld rücken. Nach einer Begutachtung eines virtuellen Modells einer zu wartenden Maschine oder eines zu behandelnden menschlichen Körpers kann er den Bildgebungsteil zurückschwenken, um die zuvor simulierte, demonstrierte und/oder erläuterte Bearbeitung realiter durchzuführen. Die Schwenk- oder auch Translationsbewegung zur Benutzung des Bildgebungsteils wird in einer Variante dieser Ausführungsform auch durch eine Gestensteuerung - also durch die Gestenerfassungseinheit GS1,GS2 veranlasst - motorisch ausgeführt, um eine Verunreinigung des Bildgebungsteils infolge einer Berührung aufgrund einer mit den Händen ausgeführten Schwenkbewegung durch einen Arbeiter oder Chirurgen zu vermeiden.

Gemäß einer weiteren Ausgestaltung der Erfindung ist vorgesehen, dass die Visualisierungseinheit VIS als portable Kommunikationseinheit, beispielsweise als Smart Phone, realisiert ist. Der Bediener kann auf diese Weise zwischen einer herkömmlichen Interaktion mit seinem Smart Phone und Smart Watch wechseln in eine VR-Interaktion, bei der das Smart Phone vor den Augen platziert wird und eine stereoskopische virtuelle Umgebung darstellt.

Das erfindungsgemäß »wearable« - also zum Tragen am menschlichen Körper ausgestaltete - Interaktionssystem umfasst mindestens eine in einem Armbereich eines Bedieners angebrachte Gestenerfassungseinheit, eine binokulare Visualisierungseinheit zur lagerichtigen Visualisierung von virtuellen Objekten in ein Sichtfeld des Bedieners sowie eine Steuerungseinheit zum Ansteuern der Visualisierungseinheit. Die Gestensteuerung erfolgt intuitiv mit einer Bewegung und/oder Drehung der Vorderarme. Ein in einem industriellen Umfeld oftmals unpassendes Eingabegerät ist somit nicht erforderlich. Der Bediener kann aufgrund des tragbaren Charakters des erfindungsgemäßen Interaktionssystems mühelos zwischen einer eigentlichen Wartung einer Industrieanlage und einer immersiven Bewegung in einem virtuellen Modell der Industrieanlage wechseln.

## Patentansprüche

1. Interaktionssystem, ausgebildet zum Tragen am menschlichen Körper, umfassend
- mindestens eine in einem Armbereich eines Bedieners (USR) angebrachte Gestenerfassungseinheit (GS1,GS2) mit einer Mehrzahl von Trägheitssensoren zur Erfassung von durch eine Armstellung, Armbewegung und/oder Armdrehung des Bedieners (USR) erzeugten Gesten;
- eine binokulare Visualisierungseinheit (VIS) zur lagerichtigen Visualisierung von Objekten in ein Sichtfeld des Bedieners (USR);
- eine Steuerungseinheit (CTR) zum Ansteuern der Visualisierungseinheit (VIS), zum Erkennen der von der Gestenerfassungseinheit (GS1,GS2) erfassten Gesten und zur Verarbeitung der durch die Gesten des Bedieners (USR) auszulösenden Interaktion des Bedieners (USR) mit den Objekten; wobei das Interaktionssystem **dadurch gekennzeichnet ist, dass** es zwei an einem jeweiligen Arm des Bedieners (USR) vorgesehene Gestenerfassungseinheiten (GS1, GS2) umfasst, wobei durch das Interaktionssystem einer der beiden Gestenerfassungseinheiten (GS1,GS2) wahlweise eine Auswahlgeste, eine Bereichswahlgeste, eine Bewegungsgeste, eine Navigationsgeste und/oder eine Zoomgeste und der anderen Gestenerfassungseinheit (GS1,GS2) eine Bestätigungsgeste zugeordnet ist.

2. Interaktionssystem nach Patentanspruch 1, die Gestenerfassungseinheit (GS1,GS2) umfassend myoelektrische, magnetische und/oder mechanische Sensoren zur Erfassung der durch Armbewegungen des Bedieners (USR) erzeugten Gesten.

3. Interaktionssystem nach einem der vorgenannten Patentansprüche, die Gestenerfassungseinheit (GS1,GS2) und/oder die Visualisierungseinheit (VIS) umfassend einen oder mehrere Aktoren zur Ausgabe einer für den Bediener (USR) haptisch wahrnehmbare Rückmeldung.

4. Interaktionssystem nach einem der vorgenannten Patentansprüche, wobei die von der Visualisierungseinheit (VIS) visualisierten Objekte eine optisch wahrnehmbare Umgebung mittels Einblendung oder Überlagerung ergänzen oder ersetzen.

5. Interaktionssystem nach einem der vorgenannten Patentansprüche mit mindestens einem Marker zur Bestimmung von Ortskoordinaten des Interaktionssystems.

6. Interaktionssystem nach einem der vorgenannten Patentansprüche mit einer in der Steuerungseinheit (CTR) vorgesehenen Schnittstelle zur Kommunikation mit mindestens einem weiteren Interaktionssystem und/oder mindestens einem Server.

7. Interaktionssystemverbund mit mindestens einem Interaktionssystem gemäß Patentanspruch 6.

8. Verfahren zur Interaktion eines Bedieners (USR) mit einem Modell eines technischen Systems, umfassend folgende Schritte:
- Erfassen von durch eine Armstellung, Armbewegung und/oder Armdrehung des Bedieners (USR) erzeugten Gesten durch mindestens eine in einem Armbereich des Bedieners (USR) angebrachte Gestenerfassungseinheit (GS1,GS2) mit einer Mehrzahl von Trägheitssensoren;
- lagerichtige Visualisierung von Objekten in ein Sichtfeld des Bedieners (USR) durch eine binokulare Visualisierungseinheit (VIS);
- Ansteuerung der Visualisierungseinheit (VIS), Erkennung der von der Gestenerfassungseinheit (GS1,GS2) erfassten Gesten und Verarbeitung der durch die Gesten des Bedieners (USR) auszulösenden Interaktion des Bedieners (USR) mit den Objekten durch eine Steuerungseinheit (CTR);
wobei das Verfahren **dadurch gekennzeichnet ist, dass** sich zwei an einem jeweiligen Arm des Bedieners (USR) vorgesehene Gestenerfassungseinheiten befinden und dass
einer von den zwei Gestenerfassungseinheiten (GS1,GS2) wahlweise eine Auswahlgeste, eine Bereichswahlgeste, eine Bewegungsgeste, eine Navigationsgeste und/oder eine Zoomgeste und der anderen Gestenerfassungseinheit (GS1,GS2) eine Bestätigungsgeste zugeordnet ist.

9. Verfahren gemäß Patentanspruch 8, **dadurch gekennzeichnet, dass** die von der Visualisierungseinheit (VIS) visualisierten Objekte eine optisch wahrnehmbare Umgebung mittels Einblendung oder Überlagerung ergänzen oder ersetzen.

10. Verfahren gemäß einem der Patentansprüche 8 oder 9 angewendet zur medizinischen Behandlung oder zur Maschinenbedienung in einem industriellen Prozess.

## Claims

1. Interaction system, embodied to be worn on the human body, comprising
- at least one gesture detection unit (GS1, GS2) that is attached in an arm region of a user (USR) and that has a plurality of inertial sensors for detecting gestures produced by an arm position, arm movement and/or arm rotation of the user (USR);
- a binocular visualization unit (VIS) for the positionally correct visualization of objects in a field of view of the user (USR); and;
- a control unit (CTR) for actuating the visualization unit (VIS), for identifying the gestures detected by the gesture detection unit (GS1, GS2) and for processing the interaction of the user (USR) with the objects that is to be triggered by the gestures of the user (USR);
wherein the interaction system is **characterized in that** it comprises two gesture detection units (GS1, GS2) provided on a respective arm of the user (USR), wherein, selectively, a selection gesture, a range selection gesture, a movement gesture, a navigation gesture and/or a zoom gesture is assigned to one of the two gesture detection units (GS1, GS2) and a confirmation gesture is assigned to the other gesture detection unit (GS1, GS2) by way of the interaction system.

2. Interaction system according to Patent Claim 1, the gesture detection unit (GS1, GS2) comprising myoelectric, magnetic and/or mechanical sensors for detecting the gestures produced by arm movements of the user (USR).

3. Interaction system according to either of the preceding patent claims, the gesture detection unit (GS1, GS2) and/or the visualization unit (VIS) comprising one or more actuators for outputting feedback that is haptically perceivable by the user (USR).

4. Interaction system according to any one of the preceding patent claims, wherein the objects visualized by the visualization unit (VIS) complement or replace optically perceivable surroundings by way of a superposition or overlay.

5. Interaction system according to any one of the preceding patent claims, having at least one marker for determining spatial coordinates of the interaction system.

6. Interaction system according to any one of the preceding patent claims, having an interface that is provided in the control unit (CTR) for the purposes of communicating with at least one further interaction system and/or at least one server.

7. Interaction system group having at least one interaction system according to Patent Claim 6.

8. Method for the interaction of a user (USR) with a model of a technical system, comprising the following steps:
- detecting gestures produced by an arm position, arm movement and/or arm rotation of the user (USR) by way of at least one gesture detection unit (GS1, GS2) with a plurality of inertial sensors that is attached in an arm region of the user (USR);
- visualizing objects in positionally correct fashion in a field of view of the user (USR) by way of a binocular visualization unit (VIS);
- actuating the visualization unit (VIS), identifying the gestures detected by the gesture detection unit (GS1, GS2) and processing the interaction of the user (USR) with the objects that is to be triggered by the gestures of the user (USR) by way of a control unit (CTR);
wherein the method is **characterized in that** there are two gesture detection units provided on a respective arm of the user (USR) and **in that**, selectively, a selection gesture, a range selection gesture, a movement gesture, a navigation gesture and/or a zoom gesture is assigned to one of the two gesture detection units (GS1, GS2) and a confirmation gesture is assigned to the other gesture detection unit (GS1, GS2).

9. Method according to Patent Claim 8, **characterized in that** the objects that are visualized by the visualization unit (VIS) complement or replace optically perceivable surroundings by way of a superposition or overlay.

10. Method according to either of Patent Claims 8 and 9, applied for medical treatment or for machine operation in an industrial process.

## Revendications

1. Système d'interaction, conçu pour être porté sur un corps humain, comprenant :
- au moins une unité de détection des gestes (GS1, GS2) placée dans une partie du bras d'un utilisateur (USR), comprenant une pluralité de capteurs d'inertie pour reconnaître les gestes produits par une position du bras, un mouvement du bras et/ou une rotation du bras de l'utilisateur (USR) ;
- une unité de visualisation binoculaire (VIS) pour la visualisation en position correcte d'objets dans un champ de vision de l'utilisateur (USR) ;
- une unité de commande (CTR) pour commander l'unité de visualisation (VIS), pour reconnaître les gestes détectés par l'unité de détection des gestes (GS1, GS2) et pour traiter l'interaction de l'utilisateur (USR) avec les objets qui doit être déclenchée par les gestes de l'utilisateur (USR) ;
dans lequel le système d'interaction est **caractérisé en ce qu'**il comprend deux unités de détection des gestes (GS1, GS2) prévues sur un bras respectif de l'utilisateur (USR),
dans lequel par le système d'interaction, est attribué à une des deux unités de détection des gestes (GS1, GS2) au choix, un geste de sélection, un geste de choix de zone, un geste de mouvement, un geste de navigation et/ou un geste de zoom et à l'autre unité de détection des gestes (GS1, GS2), un geste de confirmation.

2. Système d'interaction selon la revendication 1, l'unité de détection des gestes (GS1, GS2) comprenant des capteurs myoélectriques, magnétiques et/ou mécaniques pour détecter les gestes produits par des mouvements de bras de l'utilisateur (USR).

3. Système d'interaction selon l'une des revendications précédentes, l'unité de détection des gestes (GS1, GS2) et/ou l'unité de visualisation (VIS) comprenant un ou plusieurs actionneur(s) pour émettre un retour pouvant être perçu de manière haptique pour l'utilisateur (USR).

4. Système d'interaction selon l'une des revendications précédentes, dans lequel les objets visualisés par l'unité de visualisation (VIS) complètent ou remplacent par fondu ou superposition un environnement pouvant être perçu visuellement.

5. Système d'interaction selon l'une des revendications précédentes comprenant au moins un marqueur pour déterminer des coordonnées locales du système d'interaction.

6. Système d'interaction selon l'une des revendications précédentes comprenant une interface prévue dans l'unité de commande (CTR) pour la communication avec au moins un autre système d'interaction et/ou au moins un serveur.

7. Groupe de systèmes d'interaction comprenant au moins un système d'interaction selon la revendication 6.

8. Procédé pour l'interaction d'un utilisateur (USR), avec un modèle d'un système technique, comprenant les étapes suivantes :
- détection de gestes produits par une position du bras, un mouvement du bras et/ou une rotation du bras de l'utilisateur (USR) par au moins une unité de détection des gestes (GS1, GS2) placée dans une partie du bras de l'utilisateur (USR), comprenant une pluralité de capteurs d'inertie ;
- visualisation en position correcte d'objets dans un champ de vision de l'utilisateur (USR) par une unité de visualisation (VIS) binoculaire ;
- commande de l'unité de visualisation (VIS), reconnaissance des gestes détectés par l'unité de détection des gestes (GS1, GS2) et traitement, par l'unité de commande (CTR), de l'interaction de l'utilisateur (USR) avec les objets qui doit être déclenchée par les gestes de l'utilisateur (USR) ;
dans lequel le procédé est **caractérisé en ce que** deux unités de détection des gestes prévues se trouvent sur un bras respectif de l'utilisateur (USR) et
qu'à une des deux unités de détection des gestes (GS1, GS2) est attribué au choix, un geste de sélection, un geste de choix de zone, un geste de mouvement, un geste de navigation et/ou un geste de zoom et à l'autre unité de détection des gestes (GS1, GS2), un geste de confirmation.

9. Procédé selon la revendication 8, **caractérisé en ce que** les objets visualisés par l'unité de visualisation (VIS) complètent ou remplacent par fondu ou superposition un environnement pouvant être perçu visuellement.

10. Procédé selon l'une des revendications 8 ou 9 appliqué pour le traitement médical ou pour la conduite de machine dans un procédé industriel.
